# EUROPÄISCHE PATENTSCHRIFT

(11) **EP 2 525 082 B1**
(45) Veröffentlichungstag und Bekanntmachung des Hinweises auf die Patenterteilung: **24.06.2015**
(21) Anmeldenummer: 11166156.7
(22) Anmeldetag: 16.05.2011
(51) Int. Cl.: F03D 7/02, F03D 7/04

(54) **Verfahren zur Steuerung eines motorischen Antriebs zum Verstellen des Pitch eines Rotorblattes einer Windkraftanlage**
Method for controlling a motor drive for adjusting the pitch of a rotor blade of a wind turbine
Procédé de commande d'un entraînement motorisé pour le réglage du pas d'une pale de rotor d'une éolienne

(43) Veröffentlichungstag der Anmeldung: 21.11.2012
(73) Patentinhaber: Siemens Aktiengesellschaft, 80333 München (DE)
(72) Erfinder: Ladra, Uwe, 91056, Erlangen (DE); Schäfers, Elmar, 90763, Fürth (DE); Steinigeweg, Rolf-Jürgen, 91074, Herzogenaurach (DE)

(56) Entgegenhaltungen:
- EP-A1- 2 063 110
- EP-A2- 1 916 416
- EP-A2- 2 226 499
- DE-A1-102007 019 907

## Beschreibung

Die Erfindung betrifft ein Verfahren zur Steuerung eines motorischen Antriebs zum Verstellen des Pitch eines Rotorblattes einer Windkraftanlage. Darüber hinaus betrifft die Erfindung eine Recheneinheit zur Durchführung des Verfahrens, ein Antriebssteuergerät mit einer solchen Recheneinheit, eine Windkraftanlage mit wenigstens einem derartigen Antriebssteuergerät sowie ein Computerprogramm.

Windkraftanlagen dienen der Umwandlung kinetischer Energie von Wind mittels eines Rotors in elektrische Energie. Die Rotorblätter von Windkraftanlagen, die auch als Flügel bezeichnet werden, weisen ein aerodynamisches Profil auf, das einen Druckunterschied hervorruft, aus dem ein auf den Rotor wirkendes Drehmoment resultiert, das die Geschwindigkeit des Rotors beeinflusst. Windkraftanlagen weisen häufig Pitch-Antriebssysteme zur Rotorblattverstellung auf. Durch eine Verstellung der Anstellwinkel der Rotorblätter werden die Strömungsgeschwindigkeitsunterschiede zwischen Saug- und Druckseite der Rotorblätter verändert. Die Rotorblattverstellung erfolgt z.B. über hydraulisch betätigte Zylinder oder aber einen Elektro- bzw. Getriebemotor.

Windkraftanlagen und Funktionselemente von Windkraftanlagen, insbesondere Flügel, neigen bauartbedingt zu Schwingungen. Das Schwingungsverhalten wird dabei durch mindestens eine Eigenfrequenz charakterisiert. Diese Eigenfrequenz wird in der Regel durch Positionier- bzw. Hochlaufvorgänge angeregt, was zu unerwünschten Schwingungen des zu verfahrenden Systems und zu einer erhöhten Belastung der Konstruktion führt.

Es ist bekannt, dass bei Verfahrvorgängen, die über Geschwindigkeits- bzw. Drehzahlvorgaben erfolgen, Sollwertsprünge zu sehr hohen mechanischen Belastungen des zu verfahrenden Systems führen. Um solche Belastungsspitzen bei Geschwindigkeits- oder Drehzahländerungen zu vermeiden, werden üblicherweise die Geschwindigkeits- bzw. Drehzahlsollwerte verschliffen. Durch eine solche Glättung der Sollwertsprünge wird die Anregung von Eigenfrequenzen des schwingungsfähigen Systems reduziert, ohne diese jedoch völlig zu verhindern. Im Ergebnis müssen die mit verringerter Amplitude auftretenden Schwingungen, die aus der Anregung der Eigenfrequenz resultieren, durch eine zusätzliche, zumeist sehr aufwändige Regelung kompensiert werden.

In EP 2 226 499 A2 ist ein Verfahren zum Betreiben einer Windenergieanlage beschrieben, bei der zur Optimierung des dynamischen Verhaltens der Drehzahlregelung die Winkelbeschleunigung des Triebstrangelements berücksichtigt wird. Die Winkelbeschleunigung wird dabei aus einem Winkelpositionssignal ermittelt. Dabei erfolgt eine Filterung eines Winkelgeschwindigkeitssignals mit einer oberen Grenzfrequenz, wodurch unerwünschte Frequenzanteile herausgefiltert werden.

In EP 1 916 416 A2 ist ein Verfahren zum Betreiben einer Windenergieanlage beschrieben, bei der die Blattanstellwinkel eines Rotorblattes in Abhängigkeit von sich ändernden Windgeschwindigkeiten nachgeführt und an einen vorgegebenen Sollwert angepaßt wird. In Abhängigkeit von einem Sollwert und einem Istwert des Blattanstellwinkels wird dabei eine Verstellgeschwindigkeit und/oder eine Verstellbeschleunigung vorgegeben, mit der der Blattanstellwinkel verstellt wird.

Eine Aufgabe der vorliegenden Erfindung ist es, mechanische Schwingungen bei Windkraftanlagen zu vermeiden. Diese Aufgabe wird durch die in den unabhängigen Patentansprüchen angegebenen Erfindungsgegenstände gelöst. Vorteilhafte Weiterbildungen sind Gegenstand der Unteransprüche sowie der nachfolgenden Beschreibung.

Die im Folgenden im Zusammenhang mit dem Verfahren erläuterten Vorteile und Ausgestaltungen gelten sinngemäß auch für die entsprechenden Vorrichtungen und umgekehrt.

Eine Grundidee der Erfindung ist es, in einem Verfahren zur Steuerung von Positionier- bzw. Hochlaufvorgängen bei Windkraftanlagen mit Hilfe von linearen bzw. nichtlinearen Führungsgrößenfiltern die Sollwertverläufe für Positioniervorgänge oder bei Hochlaufvorgängen so anzupassen, dass das zu verfahrende mechanische System nicht zu Schwingungen angeregt wird. Mit anderen Worten wird die Anregung der dominierenden Eigenfrequenzen nicht nur verringert, sondern völlig ausgeschlossen. Bei dem zu verfahrenden mechanischen System handelt es sich hier um einzelne oder miteinander in mechanischer Verbindung oder in Wirkverbindung stehende Funktionselemente einer Windkraftanlage, insbesondere deren Rotorblätter. Erfindungsgemäß wird dabei der Geschwindigkeits- oder Drehzahlsollwertsprung durch eine abgestimmte Ruckfunktion derart geglättet, dass die dominierenden Eigenfrequenzen des zu verfahrenden Systems nicht angeregt werden. Somit werden unerwünschte Schwingungen des Systems vermieden, was zu einer Minimierung der mechanischen Belastung sowohl der Funktionselemente, als auch der Windkraftanlage insgesamt führt.

Das Glätten der Ruckfunktion kann auf verschiedene Art und Weise erfolgen. So ist es dem Fachmann bekannt, dass sich eine Ruckfunktion, durch welche die dominierende Eigenfrequenz des zu verfahrenden Systems nicht angeregt wird, mathematisch berechnen lässt. Berücksichtigung finden dabei neben der Eigenfrequenz des mechanischen Systems, welche durch den Verfahrvorgang nicht angeregt werden soll, auch der Maximalwert der Beschleunigung und der vorgegebene Geschwindigkeits- bzw. Drehzahlsprung. Aus der ermittelten Ruckfunktion lassen sich dann der Beschleunigungs- und der Geschwindigkeitsverlauf des angepassten Drehzahlsprungs ermitteln. Im Ergebnis entspricht der resultierende Geschwindigkeitsverlauf der Hochlaufkurve des Drehzahlsollwertes. Durch diese angepasste Hochlaufkurve wird bei dem Drehzahlsollwertsprung eine Anregung der dominierenden Eigenfrequenz vermieden. Ein Ausregeln dieser Schwingung ist somit nicht mehr erforderlich. Durch ein solches gezieltes Verschleifen des Drehzahlsollwertsprungs wird die mechanische Belastung des Systems deutlich reduziert.

Eine andere Möglichkeit der Anwendung von nichtlinearen Führungsgrößenfiltern stellt die zeitoptimale Lösung bei gegebener Ruckbegrenzung dar. Im Vergleich mit der zuvor erwähnten Lösung der frequenzabgestimmten Ruckfunktion ist diese Variante im Allgemeinen schneller. Durch Umschalten des Rucks wird eine Funktion gebildet, mit der die dominierende Eigenfrequenz nicht angeregt wird und die dem Kriterium der Zeitoptimalität genügt. Allerdings wird bei dieser Variante das Antriebssystem durch ständiges Umschalten zwischen positivem und negativem Maximalwert stärker belastet, als mit der frequenzangepassten Lösung. Durch Veränderung des maximal zulässigen Rucks kann diese Belastung jedoch verändert und den jeweiligen Anforderungen des Anwendungsfalls entsprechend angepasst werden.

Neben den oben beschriebenen Möglichkeiten für angepasste Positionier- und Hochlaufvorgänge, die der Kategorie der nichtlinearen Führungsgrößenfilter zugeordnet werden können, besteht alternativ die Möglichkeit der Anwendung von sogenannten "Input-Shapern", die auch als lineare Führungsgrößenfilter bekannt sind. Durch die Verwendung eines solchen Input-Shapers ist es möglich, eine Anregung der dominierenden Eigenfrequenzen des zu verfahrenden Systems zu vermeiden. Dabei wird der Drehzahlsollwertverlauf durch den Input-Shaper derart angepasst, dass eine Auslöschung einer oder mehrerer dominanter Frequenzen erfolgt. Durch die Anwendung geeigneter Input-Shaping-Verfahren ist es möglich, den Input-Shaper vergleichsweise robust auszulegen, z.B. derart, dass er auch bei ungenauen Systemparametern effektiv arbeitet. Auch diese Techniken sind dem Fachmann bekannt und bedürfen daher an dieser Stelle keiner weiteren Erläuterung.

Bei dem erfindungsgemäßen Steuerungsverfahren handelt es sich um ein Verfahren zur Steuerung des motorischen Antriebs zum Verstellen des Pitchwinkels eines Flügels der Windkraftanlage. Da bei einer Verstellung des Pitchwinkels durch die Drehbewegung am Pitchlager der Flügel mit bestimmten Eigenfrequenzen zu Schwingungen angeregt wird, ist es erfindungsgemäß vorgesehen, eine Anregung der dominanten Eigenfrequenzen des Flügels zu verhindern.

Bei der Erfindung ist es darüber hinaus vorgesehen, den Pitchantrieb in Abhängigkeit von sich dynamisch ändernden Resonanzfrequenzen anzusteuern. Hierzu wird die Ruckfunktion in Abhängigkeit von einem Betriebsparameter dynamisch angepasst. Dabei handelt es sich vorzugsweise um eine Anpassung in Abhängigkeit von dem Pitchwinkel, d.h. der Stellung des Flügels und/oder um eine Abhängigkeit von der Windgeschwindigkeit, also der Belastung des Flügels, und/oder um eine Abhängigkeit von der Position des Flügels relativ zum Turmschatten. Mit anderen Worten betrifft dieser Aspekt der Erfindung die Möglichkeit einer hochdynamischen Einzelblattverstellung der Rotorblätter einer Windkraftanlage zum Zweck der Turmschattenkompensation. Eine dynamische Anpassung der Ruckfunktion in Abhängigkeit von anderen Parametern, beispielsweise der Umgebungstemperatur, die über temperaturabhängig veränderbare Materialeigenschaften ebenfalls Einfluss auf die Eigenfrequenzen des Flügels hat, sind möglich.

Durch die Erfindung wird darüber hinaus eine Recheneinheit bereitgestellt, die zur Durchführung des erfindungsgemäßen Verfahrens eingerichtet ist. Außerdem stellt die Erfindung ein Antriebssteuergerät bereit, das eine solche Recheneinheit aufweist und das zur Durchführung des oben beschriebenen Verfahrens eingerichtet ist. Schließlich wird eine Windkraftanlage vorgeschlagen, die sich dadurch auszeichnet, dass jedes Rotorblatt der Windkraftanlage einen motorischen Antrieb zum Verstellen des Pitchwinkels des Rotorblattes aufweist, wobei jedem dieser Antriebe ein separates Antriebssteuergerät, wie oben beschrieben, zugeordnet ist.

Zudem schlägt die ein Computerprogramm vor. Das Computerprogramm umfasst Computerprogrammanweisungen zum Durchführen aller Schritte eines solchen Verfahrens, wenn das Computerprogramm auf einem Computer oder einer entsprechenden Recheneinheit ausgeführt wird. Der Computer bzw. die Recheneinheit ist zu diesem Zweck zur Durchführung des beschriebenen Verfahrens ausgebildet, insbesondere zur Durchführung aller Schritte entsprechend des beschriebenen Verfahrens, die in einem Zusammenhang mit der Verarbeitung von Daten stehen. Die Recheneinheit weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß des beschriebenen Verfahrens. Bei den Funktionsmodulen kann es sich um Hardwaremodule oder Softwaremodule handeln. Mit anderen Worten kann die Erfindung, soweit es die Recheneinheit betrifft, entweder in Form von Computerhardware oder in Form von Computersoftware oder in einer Kombination aus Hardware und Software verwirklicht werden. Soweit die Erfindung in Form von Software, also als Computerprogramm, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Die Erfindung wird nachfolgend anhand eines Ausführungsbeispieles beschrieben, das mit Hilfe von Zeichnungen näher erläutert wird. Hierbei zeigen:
- FIG 1: das zeitliche Verhalten einer Pitchverstellung P um 2° ohne Führungsgrößenfilter,
- FIG 2: das zeitliche Verhalten einer daraus resultierenden Flügelauslenkung L,
- FIG 3: das zeitliche Verhalten einer Pitchverstellung P um 2° mit Führungsgrößenfilter,
- FIG 4: das zeitliche Verhalten einer daraus resultierenden Flügelauslenkung L,
- FIG 5: eine schematische Darstellung von Teilen einer Windkraftanlage.

An dem Rotor einer Windkraftanlage sind eine Anzahl von Flügeln angebracht. Die niedrigsten Eigenfrequenzen eines solchen Flügels, der beispielsweise etwa 40 m lang ist und am Lager einen Durchmesser von etwa 2 m aufweist, liegen um 1 Hz.

Beim Betrieb von Windkraftanlagen kommt der Pitchverstellung eine große Bedeutung zu. Einerseits werden die Flügel durch eine Verstellung des Pitch im Wind ausgerichtet, wodurch die Flügelstellung ständig den aktuellen Windgegebenheiten angepasst wird, um die Windbelastung auf das Rotorblatt und damit die daraus resultierende Drehzahl möglichst konstant zu halten mit dem Ziel, eine möglichst konstante Leistung der Windkraftanlage bereitzustellen. Andererseits sollen die Flügel bei der Turmschattenkompensation einmal je Umlauf beim Passieren des Turmes über den Pitchantrieb dynamisch zwischen 0,5° und 3° in Abhängigkeit von der Windgeschwindigkeit und der Aerodynamik des Turms verstellt werden, um damit den Windschatten des Turmes zu kompensieren.

Beim Verstellen der Flügel mit Hilfe des Pitchantriebs werden jedoch Resonanzfrequenzen der Flügel angeregt, die zu starken Schwingungen führen können. Die Schwingformen der niedrigsten Eigenfrequenzen sind einerseits der sogenannte Flügelschlag, also die Biegung um die lange, weiche Seite, sowie andererseits die Biegung um die kurze, steife Seite. Hinzu kommen die Oberwellen dieser Eigenfrequenzen.

Die Biegung um die kurze, steife Seite ist dabei ein verkoppelter Mode, bei dem aufgrund der Geometrie des Flügels eine Drehbewegung am Pitchlager auftritt. Das bedeutet, dass bei einer Verstellung des Pitchwinkels durch die Drehbewegung am Pitchlager der Flügel mit dieser Eigenfrequenz immer zu Schwingungen angeregt wird, was zu einer erhöhten Belastung der mechanischen Struktur führt. Diese ständig wiederkehrenden dynamischen Wechsellasten können zur Ermüdung des Materials sowie schlimmstenfalls zum Bruch der Laminatstruktur des Flügels führen. Hinzu kommen noch Schwingungen durch die eigentliche Torsionsfrequenz, die jedoch deutlich höher liegt und damit in der Schwingungsamplitude auch merklich geringer ausfällt. Beispielsweise beträgt die Frequenz des Flügelschlags etwa 1 Hz und die Torsionsfrequenz etwa 10 Hz, wobei beide Werte je nach Ausführung und Bauart der Windkraftanlage variieren können.

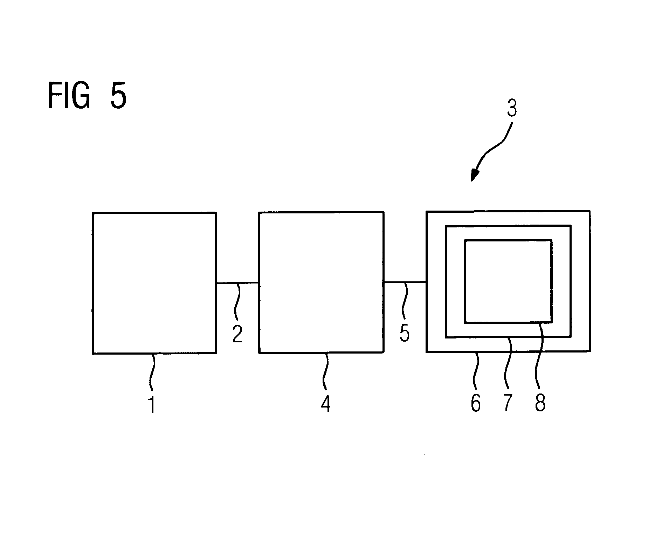

Daher wird die vorliegende Erfindung bei Windkraftanlagen vorzugsweise dafür eingesetzt, um Schwingungen der Flügel bei einer Verstellung des Pitchwinkels zu verhindern. Hierzu dient eine optimierte Geschwindigkeits- oder Drehzahlführung der Pitchverstellung der Flügel 1 der Windkraftanlage. Für die Pitchverstellung ist jeder Flügel 1 über Verbindungselemente 2 mit einem motorischen Pitchantrieb 3 verbunden. Jeder Pitchantrieb 3 umfasst einen Motor 4 und ein mit dem Motor 4 über eine Steuerleitung 5 verbundenes Antriebssteuergerät 6, das zur Ansteuerung des Pitchantriebs 3, speziell zur Steuerung von Positionier- bzw. Hochlaufvorgängen der Pitchverstellung ausgebildet ist. Zu diesem Zweck umfasst jedes Antriebssteuergerät 6 eine Recheneinheit 7. Diese Recheneinheit 7 ist zur Durchführung des beschriebenen Verfahrens, insbesondere zur Abstimmung des Führungsgrößenfilters, ausgebildet. In der Recheneinheit 7 wird ein Computerprogramm 8 mit Computerprogrammanweisungen zum Durchführen aller Schritte des beschriebenen Verfahrens ausgeführt, siehe FIG 5.

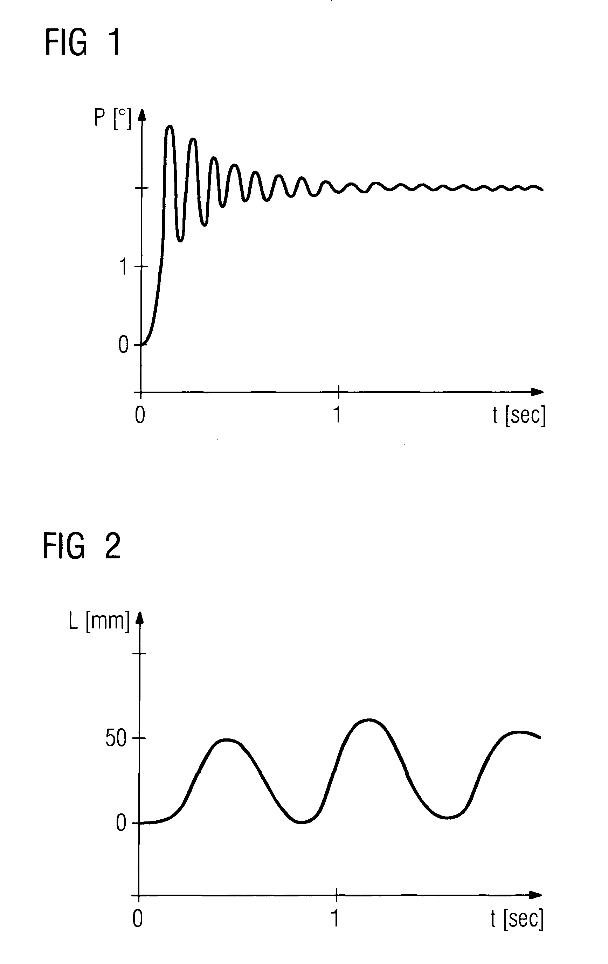

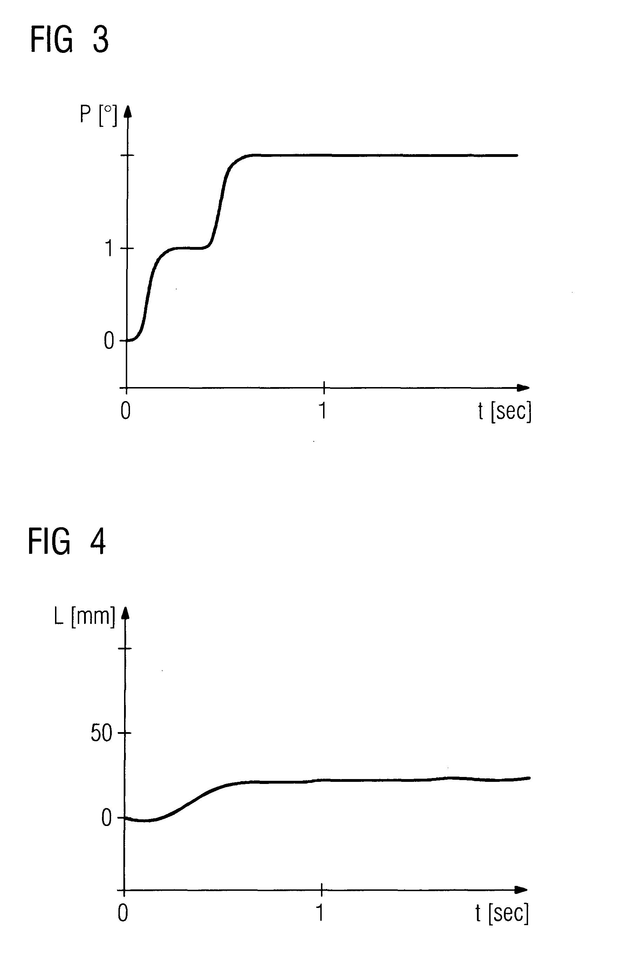

Die Pitchverstellung P und eine daraus resultierenden Flügelauslenkung L ist in den FIG 1 und 2 dargestellt. Es erfolgt eine dynamische Verstellung des Pitchwinkels um 2° für eine Turmschattenkompensation. Ohne Führungsgrößenfilterung wird der Flügel 1 einerseits zu Torsionsschwingungen mit ca. 10,8 Hz angeregt, siehe FIG 1. Andererseits wird der Flügel 1 zu Biegeschwingungen angeregt, die auch als Flügelschlag bezeichnet werden. Diese Biegeschwingungen weisen eine Frequenz von 1,4 Hz auf, siehe FIG 2. Die Schwingungen erfolgen mit sehr großen Amplituden, so dass die mechanische Struktur des Flügels 1 und der Verbindungselemente 2 stark belastet wird. Ursache für das Auftreten derart starker Schwingungen sind zum einen die verkoppelten Moden sowie zum anderen die relativ große Nachgiebigkeit des Flügels 1. Aufgrund der fortlaufenden Wiederholung bei der Turmschattenkompensation kann dies schnell zur Ermüdung des Materials und damit zu den bekannten Schäden, wie beispielsweise Ermüdungsbrüchen führen. Um die Anregung derartiger Schwingungen zu verhindern, kommt erfindungsgemäß ein Führungsgrößenfilter zum Einsatz. In diesem Fall wird das Führungsgrößenfilter so abgestimmt, dass die Torsionsfrequenz von 10,8 Hz und die Frequenz des Flügelschlags mit 1,4 Hz durch die Verstellung des Pitchwinkels nicht angeregt werden. Der 2°-Verstellvorgang des Pitchwinkels mit dem abgestimmten Führungsgrößenfilter ist in FIG 3 dargestellt. Sowohl die Torsionsschwingung, siehe FIG 3, als auch die Biegeschwingung des Flügels 1, siehe FIG 4, werden durch die Führungsgrößen nicht mehr angeregt.

Nach der Erfindung ist es darüber hinaus vorgesehen, den Pitchantrieb 3 in Abhängigkeit von sich ändernden Resonanzfrequenzen dynamisch anzusteuern. Eine derartige Steuerung geht davon aus, dass sich die Resonanzfrequenzen der Flügel 1 in Abhängigkeit von dem Pitchwinkel und/oder von der Windgeschwindigkeit und/oder von der Position des Flügels 1 ändern. Entsprechend erfolgt durch die in dem Antriebssteuergerät enthaltene Recheneinheit eine dynamische Anpassung der Ruckfunktion in Abhängigkeit von dem Pitchwinkel und/oder von der Windgeschwindigkeit und/oder von der Position des Flügels 1. Dem Fachmann sind verschiedene Möglichkeiten bekannt, der Recheneinheit zu diesem Zweck aktuelle Daten über den Pitchwinkel, Windgeschwindigkeit und/oder Position des Flügels 1 zu übermitteln.

Ein wesentlicher Vorteil bei einer Pitchverstellung mit Führungsgrößenfiltern ist eine deutliche Verringerung der Schwingungsanfälligkeit der Flügel. Damit wird die mechanische Struktur weniger belastet. Im Ergebnis erhöht sich die Lebensdauer der Windkraftanlagen deutlich. Aufgrund der geringeren Belastung besteht zudem ein deutlich geringeres Risiko, dass Risse oder Brüche der mechanischen Struktur auftreten, wodurch nicht zuletzt auch die Sicherheit im unmittelbaren Umfeld solcher Windkraftanlagen erhöht wird.

Vorzugsweise wird im Rahmen der Turmschattenkompensation der Pitchwinkel in Abhängigkeit von der Rotorblattumlaufdrehzahl hochdynamisch angepasst. Damit wird eine aktive Schwingungsbedämpfung der Windturbine verwirklicht. Vorteilhafterweise ist hierzu der Pitchantrieb als getriebeloser Direktantrieb ausgeführt, die Rotorblattverstellung erfolgt mit anderen Worten über einen getriebelosen Direktantrieb.

## Patentansprüche

1. Verfahren zur Steuerung eines motorischen Antriebs (3) zum Verstellen des Pitch eines Rotorblattes (1) einer Windkraftanlage, wobei mit Hilfe einer abgestimmten Ruckfunktion oder eines linearen Führungsgrößenfilters (Input-Shaper) ein Geschwindigkeits- oder Drehzahlsollwertsprung derart geglättet wird, dass die dominierenden Eigenfrequenzen des Rotorblattes (1) nicht zu Schwingungen angeregt werden, **dadurch gekennzeichnet, dass** der Pitchantrieb (3) in Abhängigkeit von sich dynamisch ändernden Resonanzfrequenzen des Rotorblattes (1) angesteuert wird.

2. Verfahren nach Anspruch 1, **dadurch gekennzeichnet, dass** die Ruckfunktion oder der lineare Führungsgrößenfilter in Abhängigkeit von dem Pitchwinkel und/oder von der Windgeschwindigkeit dynamisch angepasst wird.

3. Verfahren nach Anspruch 1 oder 2, **dadurch ge**- **kennzeichnet**, dass die Ruckfunktion oder der lineare Führungsgrößenfilter in Abhängigkeit von der Position des Rotorblattes dynamisch angepasst wird.

4. Verfahren nach Anspruch 3, **dadurch gekenn**- **zeichnet**, dass hierdurch eine dynamische Turmschattenkompensation erfolgt.

5. Recheneinheit (7), die zur Durchführung eines Verfahrens nach einem der Ansprüche 1 bis 4 eingerichtet ist.

6. Antriebssteuergerät (6), das eine Recheneinheit (7) nach Anspruch 5 aufweist und das zur Durchführung eines Verfahrens nach einem der Ansprüche 1 bis 4 eingerichtet ist.

7. Windkraftanlage, **dadurch gekennzeichnet, dass** jedes Rotorblatt (1) der Windkraftanlage einen motorischen Antrieb (3) zum Verstellen des Pitchwinkels des Rotorblattes (1) aufweist, wobei jedem dieser Antriebe (3) ein separates Antriebssteuergerät (6) nach Anspruch 6 zugeordnet ist.

8. Computerprogramm (8) mit Computerprogrammanweisungen zum Durchführen aller Schritte eines Verfahrens nach einem der Ansprüche 1 bis 4, wenn das Computerprogramm (8) auf einem Computer oder einer entsprechenden Recheneinheit, insbesondere einer Recheneinheit (7) nach Anspruch 5 in einem Antriebssteuergerät (6) nach Anspruch 6, ausgeführt wird.

## Claims

1. Method for controlling a motor drive (3) for adjusting the pitch of a rotor blade (1) of a wind turbine, wherein a sudden change in the speed or RPM setpoint value is smoothed with the aid of a tuned jerk function or a linear reference variable filter (Input Shaper) such that oscillation of the dominating natural frequencies of the rotor blade (1) does not result, **characterised in that** the pitch drive (3) is actuated as a function of dynamically changing resonant frequencies of the rotor blade (1).

2. Method according to claim 1, **characterised in that** the jerk function or the linear reference variable filter is dynamically adjusted as a function of the pitch angle and/or the wind speed.

3. Method according to claim 1 or 2, **characterised in that** the jerk function or the linear reference variable filter is dynamically adapted as a function of the position of the rotor blade.

4. Method according to claim 3, **characterised in that** dynamic tower shadow compensation takes place as a result.

5. Processing unit (7), which is configured to perform a method according to one of claims 1 to 4.

6. Drive control device (6), which has a processing unit (7) according to claim 5 and is configured to perform a method according to one of claims 1 to 4.

7. Wind turbine, **characterised in that** each rotor blade (1) of the wind turbine has a motor drive (3) for adjusting the pitch angle of the rotor blade (1), wherein a separate drive control device (6) according to claim 6 is allocated to each of said drives (3).

8. Computer program (8) with computer program instructions for performing all steps of a method according to one of claims 1 to 4 if the computer program (8) is run on a computer or a corresponding processing unit, in particular a processing unit (7) according to claim 5, in a drive control device (6) according to claim 6.

## Revendications

1. Procédé de commande d'un entraînement ( 3 ) motorisé pour régler le pas d'une lame ( 1 ) de rotor d'une éolienne, dans lequel, à l'aide d'une fonction inverse ou d'un filtre de grandeur de conduite linéaire ( input shaper ) adapté, on lisse un saut de valeurs de consigne de vitesse ou de nombre de tours, de manière à ne pas exciter en oscillation la fréquence propre prépondérante de la pale ( 1 ) du rotor, **caractérisé en ce que** l'on commande l'entraînement ( 3 ) de pas, en fonction de fréquences de résonance de la pale ( 1 ) du rotor se modifiant dynamiquement.

2. Procédé suivant la revendication 1, **caractérisé en ce que** l'on adapte dynamiquement la fonction inverse ou le filtre de grandeur de conduite linéaire, en fonction de l'angle de pas et/ou de la vitesse du vent.

3. Procédé suivant la revendication 1 ou 2, **caractérisé en ce que** l'on adapte dynamiquement la fonction inverse ou le filtre de grandeur de conduite linéaire en fonction de la position de la pale du rotor.

4. Procédé suivant la revendication 3, **caractérisé en ce qu'**on effectue ainsi une compensation dynamique de l'ombre de tour.

5. Unité ( 7 ) informatique, qui est conçue pour effectuer un procédé suivant l'une des revendications 1 à 4.

6. Appareil ( 6 ) de commande d'entraînement, qui a une unité ( 7 ) informatique suivant la revendication 5 et qui est conçu pour effectuer un procédé suivant l'une des revendications 1 à 4.

7. Eolienne **caractérisée en ce que** chaque pale ( 1 ) du rotor de l'éolienne a un entraînement ( 3 ) motorisé pour régler l'angle de pas de la pale ( 1 ) du rotor, un appareil ( 6 ) de commande d'entraînement distinct suivant la revendication 6 étant affecté à chacun de ces entraînements ( 3 ).

8. Programme ( 8 ) d'ordinateur ayant des instructions de programme d'ordinateur pour effectuer tous les stades d'un procédé suivant l'une des revendications 1 à 4, lorsque le programme ( 8 ) d'ordinateur est exécuté sur un ordinateur ou sur une unité informatique adéquate, notamment une unité ( 7 ) informatique suivant la revendication 5 d'un appareil ( 6 ) de commande d'entraînement suivant la revendication 6.
